# EUROPÄISCHE PATENTANMELDUNG

(11) **EP 1 086 756 A2**
(43) Veröffentlichungstag der Anmeldung: **28.03.2001**
(21) Anmeldenummer: 00120813.1
(22) Anmeldetag: 23.09.2000
(51) Int. Cl.: B09B 1/00, B03B 9/06, E02D 31/00

(54) **Verfahren zum Herstellen oder Sanieren oder Abdichten von Deponien**

(30) Priorität: 23.09.1999 DE 19945516
(71) Anmelder: Rettenberger, Gerhard, Prof., 54296 Trier (DE); Fricke, Klaus, Prof. Dr., 37075 Göttingen (DE)
(72) Erfinder: Rettenberger, Gerhard, Prof., 54296 Trier (DE); Fricke, Klaus, Prof. Dr., 37075 Göttingen (DE)
(74) Vertreter: Schumacher, Horst, Dr. Dipl.-Phys.

(57) **Zusammenfassung**

Verfahren zum Herstellen, Sanieren oder Abdichten von Deponien aus Siedlungsabfällen oder dergleichen, bei dem in einem ersten mechanischen Verfahrensschritt aus den Restabfällen ein Substrat mit einem hohen Anteil an biologisch abbaubaren Stoffen abgetrennt wird, bei dem in einem biologischen Verfahrensschritt das Substrat so behandelt wird, daß die Atmungsaktivität in 4 Tagen ≤ 10 mg O₂/g TS liegt, und/oder zusätzlich ein nasses Anaerobverfahren (Wasser-/Feststoff-Verhältnis > 6) zur Erzeugung eines wenig auslaugfähigen Deponiegutes erzeugt wird und bei dem in einem zweiten mechanischen Verfahrensschritt das Substrat in ein Feinsubstrat und in ein Grobsubstrat mit einem Siebschnitt im Bereich von 60 bis 100 mm, vorzugsweise 80 mm, getrennt wird. Die so erzeugten Fein- bzw. Grobsubstrate werden beim Aufbau von Deponien als Dichtungsmaterial bzw. als Methanoxidations- oder Gasdrainschichten oder zum dichten Aufbau von Teilen oder des gesamten Deponiekörpers verwendet.

## Beschreibung

Die Erfindung betrifft ein Verfahren zum Herstellen oder Sanieren oder Abdichten von Deponien aus Siedlungsabfällen und dergleichen.

In Siedlungsabfalldeponien, in denen biologisch abbaubare Stoffe ohne eine vorige biologische Behandlung abgelagert werden, entsteht durch den Abbau der organischen Substanzen Deponie- bzw. Biogas. Von diesem Deponiegas können Gefahren, Belästigungen und Umweltbeeinträchtigungen bis hin zur Verstärkung des Treibhauseffektes ausgehen. Daher ist es erforderlich, das Deponiegas bei Siedlungsabfalldeponien gezielt abzuleiten. Bei alten Siedlungsabfalldeponien kann dieses in Abhängigkeit vom Gefährdungspotential, das durch das Deponiegas erzeugt wird, erforderlich sein.

In der Praxis wird die Ableitung des Deponiegases fast ausschließlich als aktive Entgasung realisiert. Dabei werden die Deponiegase aus dem Deponiekörper mittels Gaskollektoren, wie beispielsweise Gasbrunnen oder Gasdrainagen, durch den Einsatz von Gasfördereinrichtungen abgesaugt und einer Einrichtung zur Desodorierung und thermischen Oxidation von Methan, beispielsweise einer Fackel zugeführt. Diese Art der Gasableitung ist nicht nur in der Installation aufwendig, sondern erfordert während des Betriebes zusätzliche Energie und Überwachung.

Weiterhin besteht bei vorhandenen Siedlungsabfalldeponien das Problem, daß durch Niederschlagswasser, das in den Deponiekörper eindringt, verschmutztes Sickerwasser entsteht. Dieses kann das Grundwasser im Bereich der Deponie erheblich verunreinigen, so daß bereits heute neue Deponien an der Basis üblicherweise abgedichtet und drainiert werden.

Als weitere Maßnahme, die insbesondere bei bestehenden Deponien ohne Basisabdichtung erforderlich ist, wird eine Oberflächenabdichtung oberhalb des Deponiekörpers angeordnet, so daß die Bildung von Sickerwasser weitestgehend unterbunden wird. Denn das Niederschlagswasser wird so am Eindringen in die Deponie gehindert.

Bei den zuvor beschriebenen Siedlungsabfalldeponien müssen für die verschiedenen Dichtungsschichten wie auch für die Drainageschichten spezielle Materialien verwendet werden. So wird beispielsweise als Dichtungsschicht ein mineralisches Material eingesetzt, auf das meist eine Kunststoffdichtungsbahn aus HDPE (Polyethylen hoher Dichte) verlegt wird, so daß ein Eindringen von Sickerwasser in das Grundwasser verhindert wird. Insbesondere bei der Oberflächenabdichtung werden Kunststoffolien ohne oder in Kombination mit einer mineralischen Dichtungsschicht verwendet. Somit wird der Aufbau einer Deponie für Siedlungsabfälle aufwendig und teuer. Zudem besteht der Nachteil, daß in geographischen Regionen, in denen kein Ton als natürliches Material vorhanden ist, für die Basisabdichtung zusätzliche Kunststoffdichtungen verwendet oder die Materialien über weite Strecken transportiert werden müssen.

Der vorliegenden Erfindung liegt daher das technische Problem zugrunde, beim Aufbau von Deponien von Siedlungsabfällen zu Zwecken der Herstellung des Deponiekörpers aus wenig durchlässigen und/oder wenig auslaugfähigen Abfällen, der Herstellung von Dichtungsschichten und/oder als Filter zur Behandlung der emittierenden Deponiegase geringere Mengen an Hilfswerkstoffen zu verwenden.

Das zuvor aufgezeigte technische Problem wird durch ein Verfahren mit den Merkmalen des Patentanspruches 1 gelöst. Erfindungsgemäß ist erkannt worden, daß es durch eine Kombination aus mechanischen und biologischen Verfahrensschritten möglich ist, die Abfälle zur Deponierung so zu verändern, daß es sowohl Dicht- als auch Filterfunktionen übernehmen kann. Erfindungsgemäß werden in einem ergänzenden mechanischen oder veränderten mechanisch-biologischen Verfahrensschritt die verbleibenden Restabfälle in ein Feinsubstrat und in ein Grobsubstrat getrennt oder es wird ein bereits die Körnung eines Feinsubstrates besitzendes Substrat daraus hergestellt.

Das erhaltene Feinsubstrat und Grobsubstrat weisen unterschiedliche Eigenschaften auf, die überraschenderweise bei der Errichtung neuer Deponien und auch zum Ausbau vorhandener Deponien und zur Altdeponiesanierung unter Substitution bisher gebräuchlicher Hilfswerkstoffe eingesetzt werden können. Als Ausgangsstoffe können Siedlungsabfälle dienen, es können jedoch auch häusliche und spezifische industrielle Schlämme, zumindest in Teilmengen, als Ausgangsstoff für das erfindungsgemäße Verfahren verwendet werden. Darüber hinaus sind auch Abfälle aus dem Deponierückbau geeignet.

Der Abbau der nativ-organischen Substanz während des biologischen Verfahrensabschnittes wird über einen genügend langen Zeitraum durchgeführt, so daß anschließend ein stabiles und nur noch gering zur Biogasbildung neigendes Substrat vorliegt. Je nach Zielsetzung kann bei Anwendung eines Anaerobverfahrens mit einem Wasser-Feststoffverhältnis > 6 auch ein unter Deponieverhältnissen gering auslaugbares Deponiegut erzeugt werden. Der biologische Umsetzungsprozeß soll so weit geführt werden, daß die Atmungsaktivität in 4 Tagen (AT₄) des Substrates ≤ 10 mg O₂/g TS (10 mg Sauerstoff pro Gramm Trockensubstanz), vorzugsweise ≤ 5 mg O₂/g TS, beträgt. Dabei stellt der Parameter Atmungsaktivität ein Maß für den Abbaugrad organischer Substanzen dar. Die Atmungsaktivität, also die Zufuhr von Sauerstoff bzw. dessen Verbrauch bei der Zersetzung der organischen Substanzen ist dabei um so geringer, je fortgeschrittener die Zersetzung der nativ-organischen Substanz durch die Mikroorganismen ist. Dabei tritt während des biologischen Prozesses aufgrund der Zersetzung des Substrates selbst eine teilweise Zerkleinerung des Substrates auf.

In dem ergänzenden oder optimierenden Verfahrensschritt wird in einer ersten Variante das Grobsubstrat mit einer Korngröße von ≥ 40 bis 100mm, vorzugsweise ≥ 60 bis 80mm, abgetrennt.

In bevorzugter Weise wird vor der Trennung des Substrates eine Zerkleinerung des Substrates durchgeführt, so daß sich der Anteil des gesamten Substrates, der nach der Trennung als Feinsubstrat weiter verwendet werden kann, erheblich vergrößert wird. Bei dem nach der Zerkleinerung stattfindenden bevorzugten Siebeschritt wird dann das Feinsubstrat vom Grobsubstrat getrennt, wobei das Feinsubstrat und das Grobsubstrat anschließend unterschiedlichen Verwendungen zugeführt werden, z. B. wird das Grobsubstrat weiter zerkleinert.

Weiterhin kann die mechanisch-biologische Restabfallbehandlung so modifiziert werden, daß der ergänzende oder optimierende mechanische Verfahrensschritt vor und/oder nach dem biologischen Verfahrensschritt durchgeführt wird. Somit kann einerseits das Substrat mit dem hohen Anteil an biologisch abbaubaren Stoffen vor der biologischen Behandlung in einen groben Anteil und in einen feinen Anteil getrennt werden, die unabhängig voneinander einer biologischen Behandlung zugeführt werden. Nach der biologischen Behandlung kann dann wahlweise erneut eine mechanische Trennung in Fein- und Grobsubstrat erfolgen, wobei die Eigenschaften der Fein- bzw. Grobsubstrate entsprechend ihren Anforderungen weiter verbessert werden können. Letztlich ist es auch möglich, vor der biologischen Behandlung keine Trennung des Substrates in Fein- bzw. Grobsubstrat durchzuführen, um das Verfahren insoweit zu vereinfachen, als daß nur ein Substrat einer biologischen Behandlung zugeführt wird.

Als Trennschritte, die während der zuvor beschriebenen mechanischen Verfahrensschritten durchgeführt werden, sind neben Siebschritten auch fluidische Trennverfahren und Sichtungsschritte anwendbar.

Das durch die zuvor beschriebene Kombination von Verfahrensschritten erzeugte Feinsubstrat wird insbesondere als Dichtungsmaterial, insbesondere zur Basis-, Zwischen- und/oder Oberflächenabdichtung von Deponien verwendet. Die erreichten Durchlässigkeitsbeiwerte liegen unterhalb von ungefähr 10^{-/} bis ¹⁰⁻⁸m/sec. Darüber hinaus kann das Feinsubstrat als Restabfall auch insgesamt als Dichtungskörper fungieren bzw. selbst als Deponiekörper verwendet werden.

Bei Anwendung eines nassen Anaerobverfahrens entsteht zusätzlich ein wenig auslaugbares Deponiegut, so daß zusammen mit der geringen Durchlässigkeit das Langzeitverhalten einer Deponie wesentlich verbessert wird, was die Nachsorge verkürzt und vereinfacht und die Umweltauswirkungen wesentlich verbessert.

In bevorzugter Weise wird dazu das Feinsubstrat während der Siebung, der Zerkleinerung und der Mietenumsetzung homogenisiert, damit eine gleichmäßige Korngrößenverteilung im Feinsubstrat erreicht wird. Dadurch wird die Dichtungseigenschaft des Feinsubstrates verbessert. Weiterhin können in bevorzugter Weise mineralische Materialien vor der biologischen Behandlung des abgetrennten Substrates oder nach der biologischen Behandlung dem Feinsubstrat zugemischt werden. Diese mineralischen Materialien, vorzugsweise feinkörnige Materialien wie z. B. Ton, aber auch Aschen, beeinflussen in günstiger Weise die Verteilung der Korngrößen in dem Feinsubstrat, so daß auch durch diese Maßnahme die Dichtungseigenschaft des Feinsubstrates verbessert wird. Weiterhin wird das Feinsubstrat in bevorzugter Weise auf einen bestimmten Wassergehalt eingestellt.

Ein bei der erfindungsgemäßen mechanisch-biologischen Restabfallbehandlung neben dem Feinsubstrat erzeugtes Grobsubstrat kann in bevorzugter Weise für eine Filterschicht zur Methanoxidation bzw. für die Rekultivierungsschicht von Deponien verwendet werden. Das Grobsubstrat weist eine grobkörnige Struktur auf. Eine Schicht aus dem Grobsubstrat ist gasgängig, so daß beispielsweise Luft zur Oxidation von in einer Deponie entstehendem Methan in eine solche Schicht eindringen kann. Somit kann die aktiv durchzuführende Oxidation von Restmethan sowohl auf neu angelegten Deponien als auch auf Altdeponien auf den Einsatz einer passiven Entsorgung mittels Oxidation in einer Schicht reduziert oder vollständig vermieden werden. Als Filter- und Methanoxidationsschicht kann auch das Feinsubstrat Verwendung finden, wenn diesem durch einen Siebschnitt der Feinstkornanteil von zweckmäßigerweise mindestens ≤ 5mm, vorzugsweise ≤ 10 mm oder höher, entzogen wird.

Weiterhin ist das Grobsubstrat auch für den Bau einer Drainageschicht geeignet. Durch den grobkörnigen Aufbau ist es möglich, daß in einer Schicht aus dem Grobsubstrat vorhandenes Wasser ablaufen kann. Das Grobsubstrat kann daher als Entwässerungsschicht auf einer Basisabdichtung oder einer Oberflächenabdichtung zur Anwendung kommen. Darüber hinaus kann das Grobsubstrat bei einer Verwendung als Drainageschicht auch zu einer gleichmäßigen Verteilung von durchtretenden Gasen verwendet werden. Damit kann das Grobsubstrat als Ausgleichsschicht oder als Gasdrainschicht unter einer Oberflächenabdichtung zur Anwendung kommen.

In bevorzugter Weise wird das erzeugte Grobsubstrat während der Siebung, der Zerkleinerung und der Mietenumsetzung homogenisiert, so daß eine möglichst gleichmäßige Korngrößenverteilung des Grobsubstrates erreicht wird. Weiterhin werden in bevorzugter Weise organische Substratträger, wie beispielsweise Holzteile, dem Grobsubstrat zugemischt, um die Fähigkeit des Grobsubstrates zur Methanoxidation bzw. Rekultivierung zu verbessern. Damit weiterhin weitgehend sichergestellt ist, daß das Grobsubstrat gas- bzw. flüssigkeitsdurchlässig ist, wird in bevorzugter Weise bei dem zweiten mechanischen Verfahrensschritt das Substrat bzw. das Grobsubstrat von flächigen Materialien, beispielsweise von Folien, im wesentlichen befreit. Schließlich werden zur Stabilisierung des Grobsubstrates langfristig stabile Strukturbildner zugemischt, damit in vorteilhafter Weise die Eigenschaften des Grobsubstrates bei der Verwendung als Methanoxidations- und Rekultivierungssubstrat bzw. als Drainagesubstrat langfristig gewährleistet sind.

Die hier zuvor beschriebenen vorteilhaften Eigenschaften des bei dem erfindungsgemäßen Verfahren zur mechanisch-biologischen Restabfallbehandlung entstandenen Fein- und Grobsubstrates werden erfindungsgemäß beim Bau von Deponien aus Siedlungsabfällen bzw. beim Ausbau, Weiterbau und Abschluß sowie bei der Sanierung von bestehenden Deponien verwendet. Grundsätzlich sind diese Substrate aufgrund ihrer hervorragenden Eigenschaften auch anderweitig für ähnliche Dicht- und Fitteraufgaben vorteilhaft einsetzbar.

Bei den erfindungsgemäßen Deponien aus Siedlungsabfällen befindet sich - in einer ersten Variante - unter dem zu deponierenden Stoffen ein Basisabdichtungssystem, um das Eindringen von Sickerwasser in das Grundwasser zu verhindern. Der Deponiekörper ist nach oben durch ein Oberflächenabdichtungssystem abgedichtet.

Erfindungsgemäß ist nun anstelle der mineralischen Dichtungsschicht bei dem Basis- bzw. Oberflächenabdichtungssystem die Dichtungsschicht zumindest teilweise aus einem Dichtungsmaterial hergestellt, das vor oder nach der biologischen Behandlung bei einer mechanisch-biologischen Restabfallbehandlung als Feinsubstrat abgetrennt worden ist.

Erfindungsgemäß weist die Rekultivierungsschicht zumindest teilweise ein Material auf, das vor oder nach der biologischen Behandlung bei einer mechanisch-biologischen Restabfallbehandlung als Grobsubstrat oder als Feinsubstrat mit Abtrennung des Feinstkornanteiles abgetrennt worden ist.

Erfindungsgemäß kann das Feinsubstrat als Dichtungsschicht bzw. das Grobsubstrat oder das abgesiebte Feinsubstrat als Filterschicht auch als temporäre Abdeckung von Deponieabschnitten eingesetzt werden, die zeitweise nicht verfüllt werden bzw. bei denen bei zum Abklingen der Hauptsetzungen noch kein Abdichtungssystem aufgebracht werden kann. Dabei dient das Grobsubstrat bspw. das abgesiebte Feinsubstrat als Methanoxidationsschicht zur Verminderung von Deponiegasemigrationen und das Feinsubstrat als Abdeckung (Abdichtung) zur Minimierung der Sickerwasserbildung.

Schließlich kann eine Drainageschicht, die zwischen der Basisdichtungsschicht und dem Deponiekörper angeordnet ist, oder die Entwässerungsschicht unter der Rekultivierungsschicht eines Oberflächenabdichtungssysterns zumindest teilweise aus dem zuvor beschriebenen Grobsubstrat bestehen. Ebenso kann eine Gasdrainschicht, die unter der Dichtungsschicht angeordnet ist, zumindest teilweise aus dem Grobsubstrat bestehen.

Weiter bevorzugt kann der Deponiekörper ganz oder teilweise aus Feinsubstrat so aufgebaut werden, daß er insgesamt als Dichtung wirkt, d.h. einen Durchlässigkeitsbeiwert ≤ 10^{-/} bis 1O⁻⁸ m/s besitzt. Bei Anwendung eines nassen Anaerobverfahrens ist der Deponiekörper zusätzlich noch gering auslaugbar.

Die vorgenannten sowie beanspruchten und in den Ausführungsbeispielen beschriebenen erfindungsgemäß zu verwendenden Verfahrensschritte und Materialien unterliegen in ihrer technischen Konzeption, beispielsweise bezogen auf die Größe, Formgestaltung und Materialauswahl, keinen besonderen Ausnahmebedingungen, so daß die in dem Anwendungsgebiet bekannten Auswahlkriterien uneingeschränkt Anwendung finden können. Weitere Einzelheiten, Merkmale und Vorteile des Gegenstandes der Erfindung ergeben sich aus der nachfolgenden Beschreibung der zugehörigen Zeichnung, in der - beispielhaft - bevorzugte Ausführungsformen des erfindungsgemäßen Verfahrens sowie der erfindungsgemäßen Deponie dargestellt sind. In der Zeichnung zeigen
- Fig. 1: den Aufbau des oberen Teils einer Deponie in einem ersten Ausführungsbeispiel,
- Fig. 2 a, b: den Aufbau des oberen Teils einer Deponie in einem zweiten Ausführungsbeispiel,
- Fig. 3: den Aufbau des oberen Teils einer Deponie in einem dritten Ausführungsbeispiel,
- Fig. 4 a-c: den Aufbau des oberen Teils einer Deponie in einem vierten Ausführungsbeispiel als Varianten des Aufbaus gemäß Fig. 3,
- Fig. 5: eine Querschnittsdarstellung einer Deponie aus Siedlungsabfällen mit Darstellung der verschiedenen Anwendungsbereiche des erzeugten Substrats und
- Fig. 6 a-j: Flußdiagramme einer Mehrzahl von Varianten des erfindungsgemäßen Verfahrens.

### Ausführungsbeispiele:

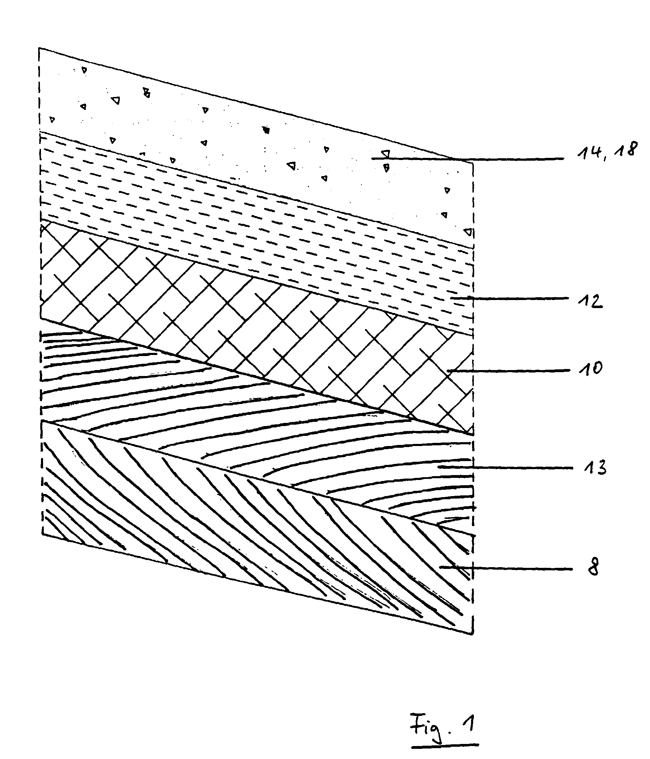

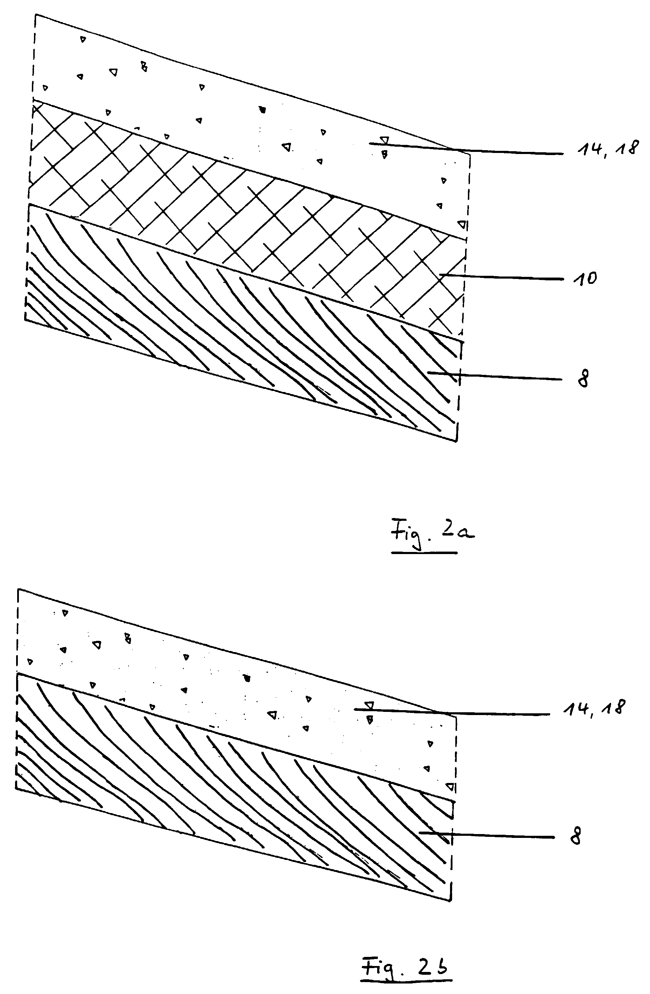

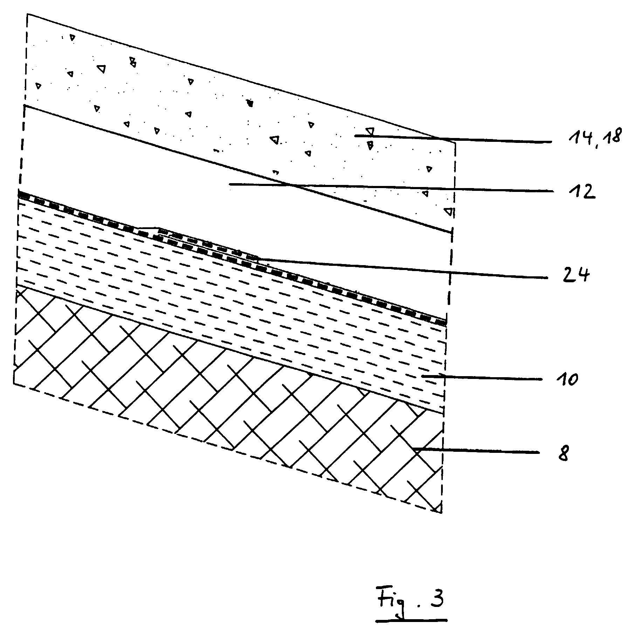

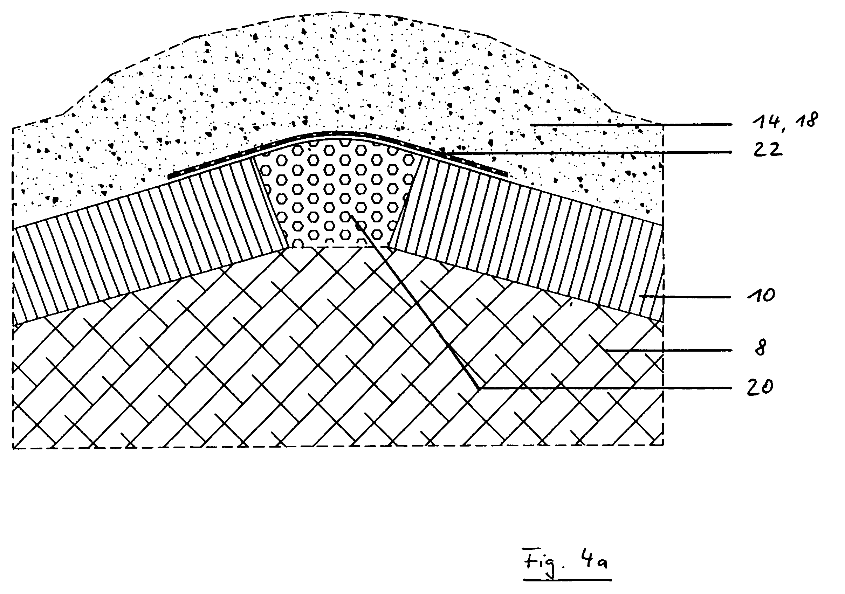

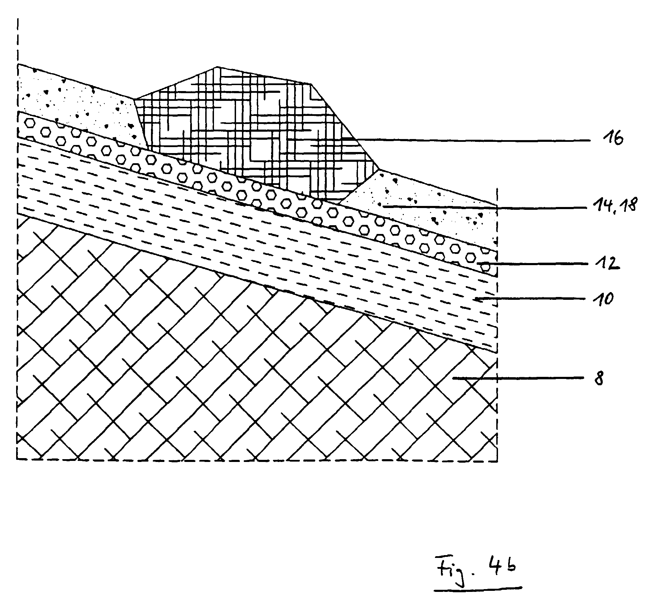

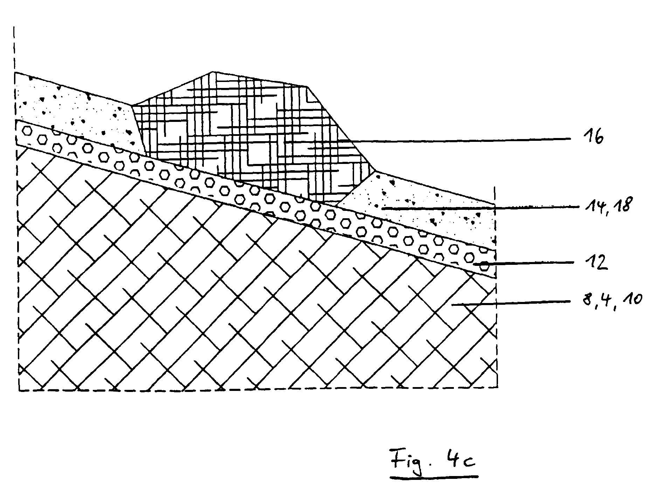

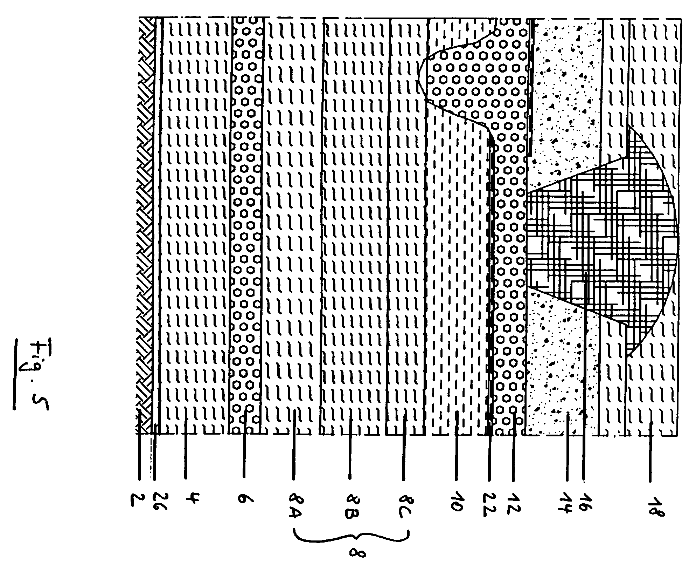

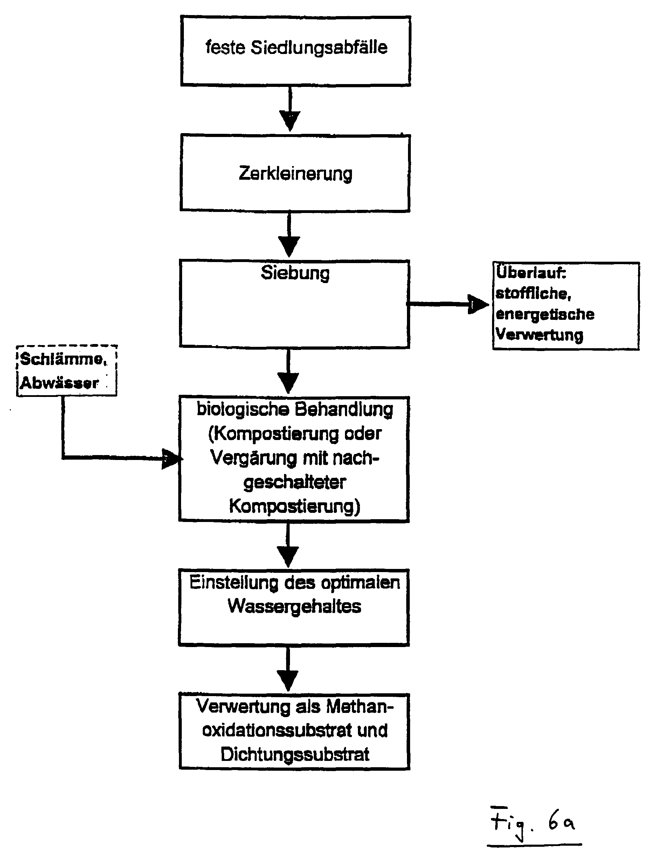

1. Zur Erzeugung eines Feinsubstrates sind beispielsweise folgende Behandlungsschritte vorteilhaft: Durch Siebung und/oder Sichtungsschritte auf ≤ 80 mm Korngröße wird ein Großteil der zäh elastischen Komponenten abgetrennt. In der anschließenden biologischen Behandlung wird ein hoher Abbau der mikrobiell abbaubaren organischen Substanzen durch eine gezielte anaerobe und/oder aerobe biologische Behandlung, d. h. vorteilhafterweise durch Kompostierung oder Vergärung, erreicht, wobei ein AT₄ ≤ 10 mg O ₂/gTS oder gar ≤ 5 mg O₂ /gTS, erreicht wird. Ferner kann, ggf. zusätzlich, ein nasses Anaerobverfahren mit einem Wasser zu Feststoff-Verhältnis > 6 zur Erzeugung eines wenig auslaugfähigen Deponiegutes eingesetzt werden. Weiterhin wird der Wassergehalt vor dem Einbau so eingestellt, daß ein Verdichtungsgrad bezogen auf die Proctordichte von Dₚᵣ> 95 % erreicht wird. Die Einstellung auf den gewünschten Wert des Wassergehaltes wird unter Zuhilfenahme von Belüftungstechniken mit und ohne Nutzung der bei dem biologischen Prozeß entstehenden Prozeßwärme oder der gewonnenen Energie durchgeführt. Weiterhin ist auch die Zumischung geeigneter Stoffe möglich, um den angestrebten Wassergehalt zu erreichen. Schließlich wird das Feinsubstrat ggf. während der Siebung, der Zerkleinerung und der Mietenumsetzung homogenisiert.
   Nach Abtrennung des Feinsubstrates kann vor oder nach dem biologischen Verfahrensschritt durch Zumischung geeigneter Komponenten wie beispielsweise mineralischer Stoffe die Eigenschaft des Feinsubstrates zur Erreichung eines geringen Durchlässigkeitsbeiwertes erhöht werden. Ebenso kann die Dichtungseigenschaft des Feinsubstrates durch ein Verdichten des Feinsubstrates gesteigert werden, da das Feinsubstrat plastische Eigenschaften, ähnlich wie beispielsweise Ton, aufweist.
2. Für die Herstellung des Grobsubstrates für eine Verwendung als Methanoxidations- bzw. Rekultivierungssubstrat sind folgende Verfahrensschritte vorteilhaft. Nach dem Abbau der mikrobiell leicht verfügbaren organischen Substanzen wird die Gasgängigkeit des Grobsubstrates durch eine Homogenisierung des Grobsubstrates sowie durch Zumischung geeigneter stabiler organischer Substratträger nach Abschluß der Behandlung im biologischen Verfahrensschritt, beispielsweise durch Zugabe von Holzelementen wie Holzhäcksel sichergestellt. Die Zumischung strukturstabiler organischer Materialien bewirkt wegen der Optimierung der Gasdichtigkeit durch die Bereitstellung eines Substrates für die Mikroorganismen, eine Vorbereitung der Methanoxidation. Dabei sollte der Abbau der organischen Substanzen möglichst vollständig sein, so daß das Grobsubstrat selbst nur noch in geringem Maße selbst zur Erzeugung von Deponiegas beiträgt.
3. Soll dagegen das Grobsubstrat als Drainagesubstrat für die Sickerwasser- und Oberflächenwasserzuführung und für die Gasverteilung verwendet werden, sind speziell die folgenden Verfahrensschritte vorteilhaft: Nach dem Abbau der biologisch abbaubaren Komponenten während der biologischen Behandlung wird die Wasser- und Gasgängigkeit des Grobsubstrates dadurch sichergestellt, daß das Grobsubstrat eine Körnung aufweist, die ≥ 10mm beträgt. Weiterhin werden durch zusätzliche Sieb- und Windsichtungsschritte flächige Materialien, wie beispielsweise Folien entfernt. Schließlich wird durch Zumischung von langfristig stabilen Strukturbildnern sichergestellt, daß die zuvor beschriebenen Eigenschaften der Wasser- und Gasgängigkeit des Grobsubstrates über längere Zeiträume gewährleistet ist, was insbesondere bei der Anlage einer Deponie wichtig ist. Darüber hinaus wird die Diffusion von Sauerstoff in die Oxidationsschicht durch die Zugabe von Strukturbildnern verbessert.
4. Wie zuvor beschrieben worden ist, können das Feinsubstrat und das Grobsubstrat in verschiedener Weise verwendet werden, um die beim Aufbau von Deponien für Siedlungsabfälle erforderlichen Dichtungs-, Rekultivierungs- und Gasverteilungsschichten herzustellen. Insbesondere kann auch das Feinsubstrat als Methanoxidationsschicht bzw. Rekultivierungsschicht eingesetzt werden, wenn ihm durch eine Absiebung das Feinstkorn ≤ 5 mm oder gar ≤ 10 mm entzogen wird.
5. Prinzipiell weist eine Deponie für Siedlungsabfälle zunächst den aus den zu deponierenden Stoffen bestehenden Deponiekörper auf. Nicht zuletzt wegen gesetzlicher Vorschriften ist es erforderlich, den Deponiekörper nach unten mit Hilfe eines Basisabdichtungssystems abzudichten, um das Eindringen von mit Schadstoffen belastetem Sickerwasser in das Grundwasser zu verhindern. Der Deponiekörper ist andererseits nach oben mit Hilfe eines Oberflächenabdichtungssystems abgedichtet, um ein Eindringen von Oberflächenwasser in den Dichtungskörper zu verhindern. Auch verhindert ein Oberflächenabdichtungssystem den Gasaustausch mit der Atmosphäre, insbesondere die Emission der durch im Deponiekörper stattfindenden Vergärungsprozessen entstandenen Gase. Weiterhin ist oberhalb der Oberflächendichtungsschicht eine Rekultivierungsschicht angeordnet, die zu einer Begrünung und Bepflanzung der gesamten Deponie dient, um die Deponie möglichst harmonisch in das Landschaftsgefüge einzubinden. Erfindungsgemäß wird diese Rekultivierungsschicht durch die Anwendung des Substrates nach mechanisch-biologischer Behandlung als Methanoxidationsschicht verwendet, um damit u.a. auf andere Entgasungstechniken (z. B. aktiver Entgasung) verzichten zu können.
6. Gemäß der vorliegenden Erfindung werden das bei dem Verfahren zur mechanisch-biologischen Restabfallbehandlung entstehende Feinsubstrat und Grobsubstrat eingesetzt, um den Deponiekörper teilweise oder ganz aus diesem Material aufzubauen oder die Dichtungs-, Rekultivierungs- und/oder die Entwässerungsschichten bzw. Ausgleichs- und Gasdrainschichten nach der bisherigen Art zumindest durch das erzeugte Substrat teilweise zu ersetzen, um somit einerseits die günstigen Eigenschaften des Feinsubstrates bzw. des Grobsubstrates zu nutzen und andererseits das Volumen des letztlich zu deponierenden Restabfalls zu verringern. Dabei soll als weiterer Aspekt vor allem auch die aktive Entgasung durch eine passive Entgasung ersetzt werden, wobei die Gase durch den Eigendruck aus dem Innern der Deponie der Oberfläche zuströmen und oberflächennah noch im Deponiekörper bzw. in den überlagernden Schichten bzw. Rekultivierungsschichten mikrobiell und chemisch ganz oder teilweise abgebaut werden. Dazu gibt es verschiedene Möglichkeiten des Aufbaus einer Deponie, die im folgenden einzeln erläutert werden. Weiterhin ist es möglich, daß der zweite mechanische Verfahrensschritt vor dem biologischen Verfahrensschritt durchgeführt wird, so daß bereits vor der biologischen Behandlung eine Trennung in ein Feinsubstrat und ein Grobsubstrat erfolgt.
   Ebenso ist es möglich, den zweiten mechanischen Verfahrensschritt nach dem biologischen Verfahrensschritt durchzuführen, so daß die Trennung in ein Feinsubstrat und ein Grobsubstrat erst nach der biologischen Behandlung durchgeführt wird. In Kombination ist es ebenso möglich, sowohl vor als auch nach dem biologischen Verfahrensschritt den zweiten mechanischen Verfahrensschritt durchzuführen, wodurch die physikalischen Eigenschaften des Feinsubstrates sowie des Grobsubstrates weiter verbessert werden können.

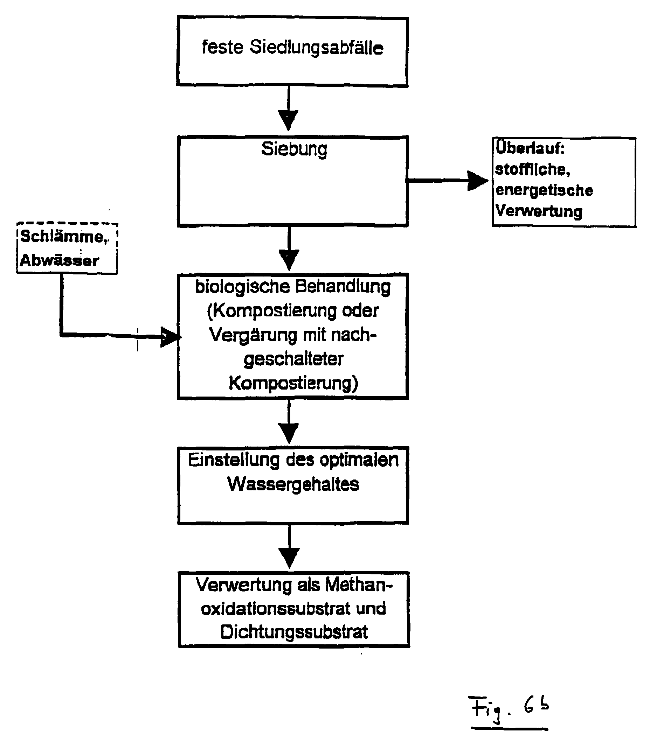

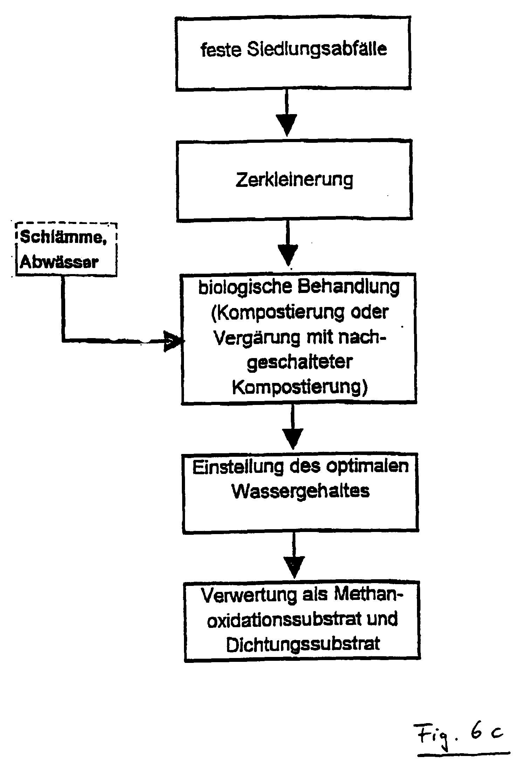

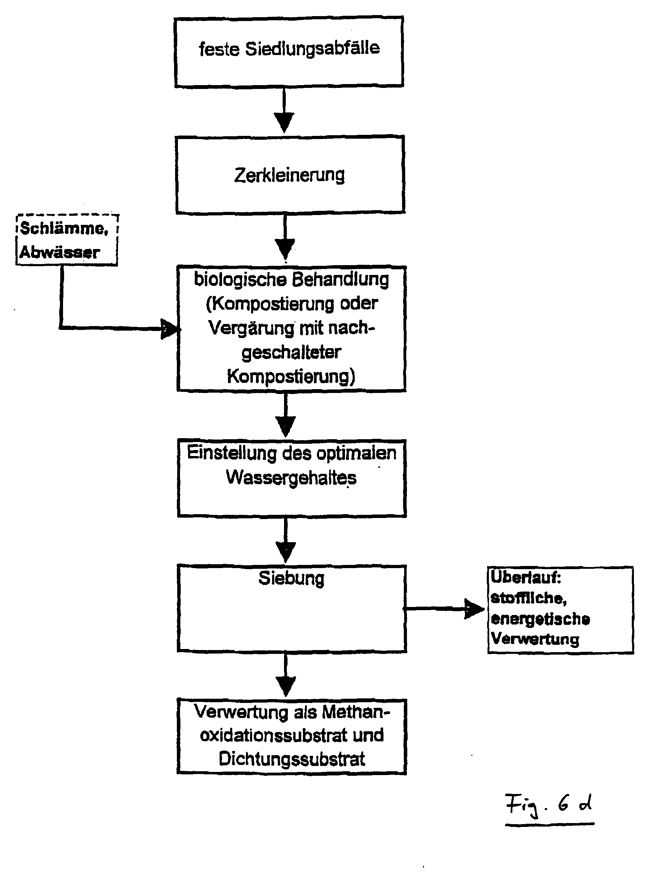

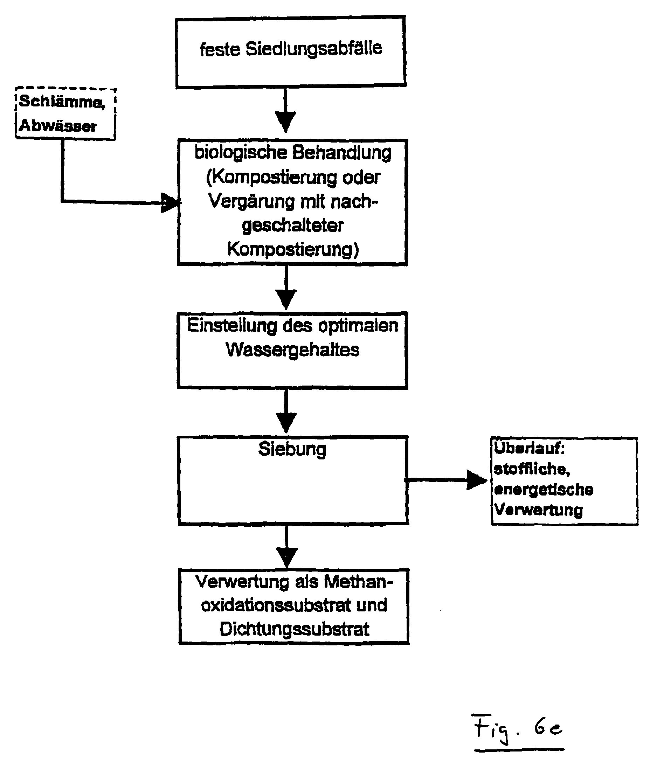

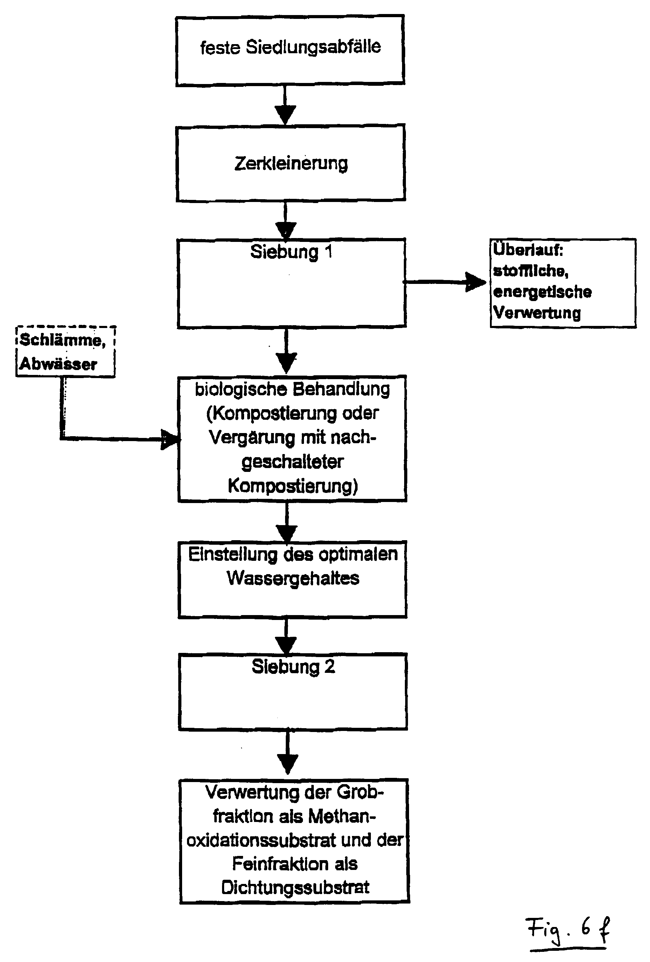

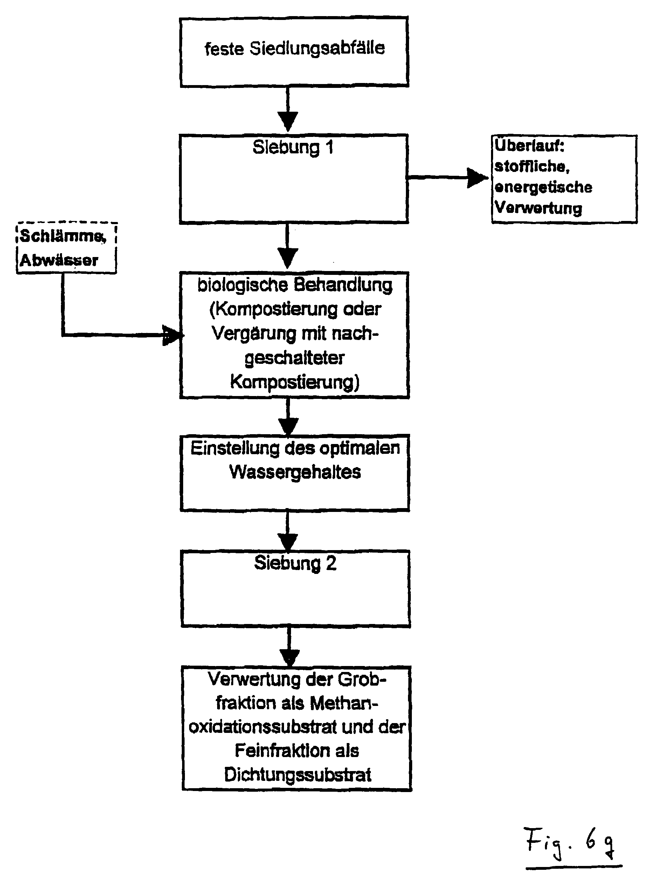

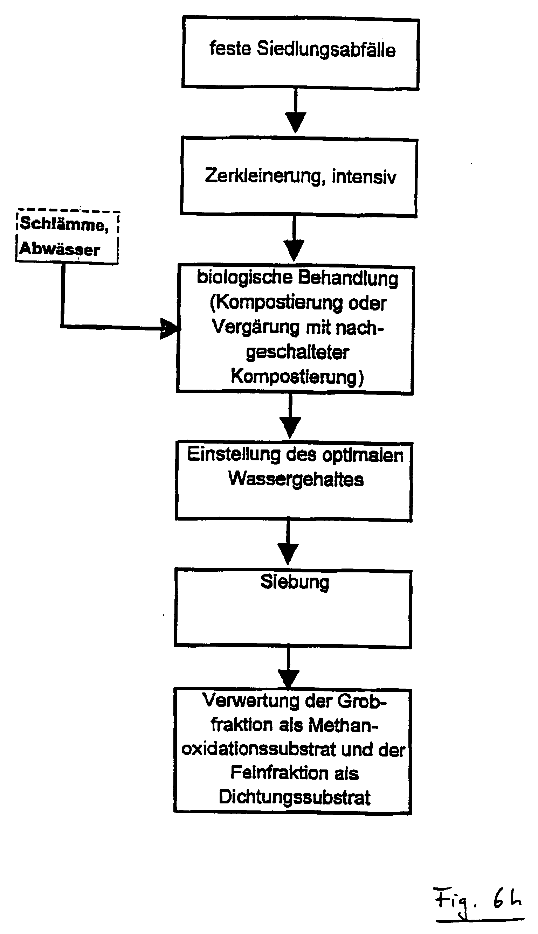

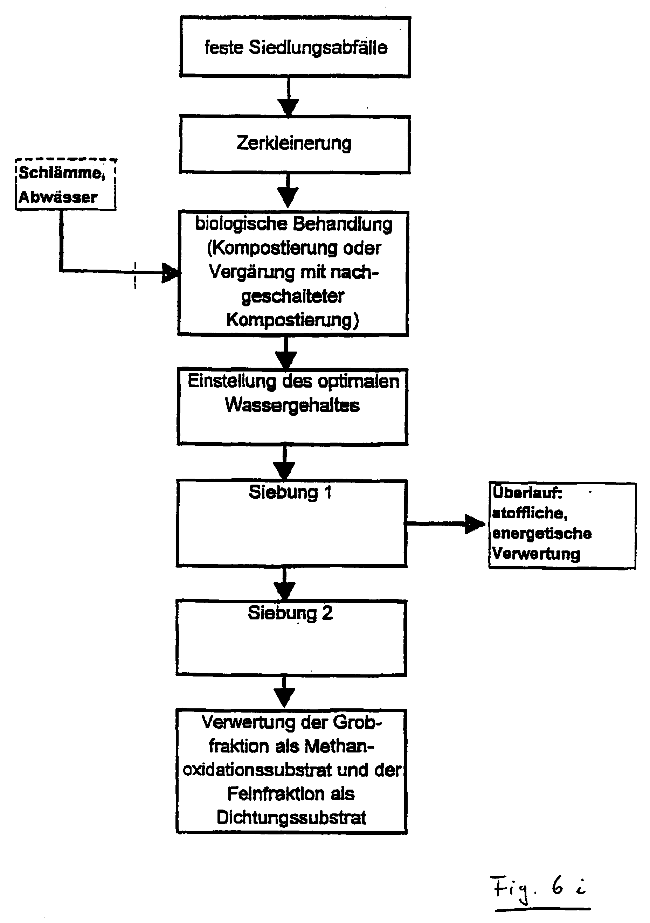

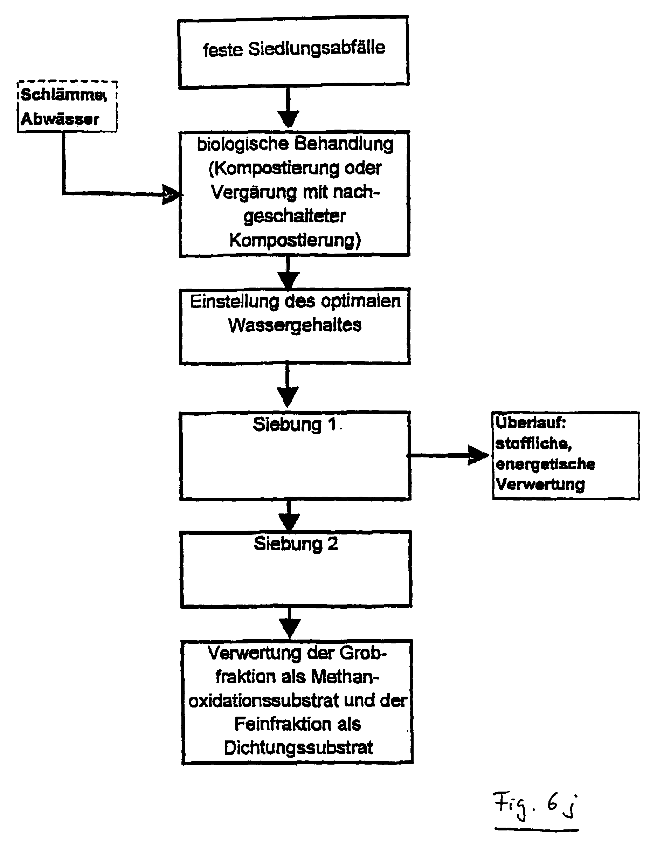

   In den Fig. 6a bis 6j sind verschiedene Ausführungsformen des zuvor beschriebenen Verfahrens in Form von Fluß- bzw. Blockdiagrammen dargestellt, die aufgrund der vorangegangenen Darstellung aus sich heraus verständlich sind.
7. Bevor auf die in den Figuren 1 bis 4 dargestellten besonderen Ausgestaltungen eines Oberflächenabdichtungssystems bzw. einer Oberflächenabdichtung eingegangen wird, wird anhand der Fig. 5 der modulare Aufbau einer gesamten Deponie anhand eines Ausführungsbeispiels näher erläutert.
   Auf der Oberfläche eines vorhandenen Untergrundes 2, dem Deponieauflager, ist auf einem Deponieplanum 26 eine Basisdichtungsschicht 4 angeordnet, auf der eine Entwässerungsschicht 6 angeordnet ist. Die Entwässerungsschicht 6 dient dazu, Sickerwasser aufzufangen und abzuleiten, das durch den darüber angeordneten Abfall (Deponiekörper) 8 nach unten durchsickert. Der in der Fig. 5 dargestellte Abfall (Deponiekörper) 8 kann aus drei Teilschichten, die aus unterschiedlichen Materialien und Abfallarten bestehen können, aufgebaut sein. An einer bestehenden Deponie kann bereits Abfall 8A in früheren Jahren deponiert worden sein. Dieser Abfall kann mit dem Substrat nach mechanisch-biologischer Vorbehandlung überschüttet werden, wobei hier das Material 8B möglichst hochverdichtet wird, wobei eine geringe Durchlässigkeit (≤ 10^{-/} bis 10⁻⁸ m/s) erreicht wird. Darüber wird das mechanisch-biologisch vorbehandelte Feinsubstrat hochverdichtet als Dichtungsschicht 8C mit geringer Durchlässigkeit (≤ 10^{-/} bis 10⁻⁸ m/s) eingebaut. Jede Variante kann auch einzeln zur Anwendung kommen. Wird z. B. nur die Dichtungsschicht 8C eingebaut, kann ggf. auf eine Basisdichtungsschicht 4 bzw. auf die nachfolgend erläuterte Oberflächendichtungsschicht 10 verzichtet werden. Wird die Oberflächendichtungsschicht 10 gebaut, kann auf die Dichtungsschicht 8C verzichtet werden. Oberhalb des Deponiekörpers 8 und diesen abdichtend ist eine Oberflächendichtungsschicht 10 (sofern die Abdichtungsschicht 8C nicht realisiert ist) vorgesehen, die - wie zuvor beschrieben - ein Eindringen von Oberflächenwasser verhindern soll.
   Zur Ableitung des Deponiegases muß, sofern die Durchlässigkeit von der Oberflächendichtungsschicht 10 zur Ableitung der Gase nicht ausreicht, die Oberflächendichtungsschicht 10 an verschiedenen Stellen durchbrochen werden. Dann ist es zweckmäßig, daß oberhalb der Oberflächendichtungsschicht 10 eine Entwässerungsschicht 12, die als Gasverteilerschicht wirkt, angeordnet wird, die in Verbindung mit dem Deponiekörper 8 steht. Das sich im Deponiekörper 8 unterhalb der Oberflächendichtungsschicht 10 ansammelnde Deponiegas kann somit an gezielt vorgegebenen Stellen in die Gasverteilerschicht 12 eintreten, wodurch eine möglichst gleichmäßige Verteilung des Deponiegases, das hauptsächlich aus Methan und Kohlendioxid besteht, erreicht wird. Bei geringem Gasanfall kann ggf. auf die Entwässerungsschicht (Gasverteilerschicht) verzichtet werden. Oberhalb der Entwässerungsschicht (Gasverteilerschicht) 12 ist die Rekultivierungsschicht 14 vorgesehen, die so ausgebildet wird, daß sie zur Oxidation des Methans beiträgt. Dazu wird in die Rekultivierungsschicht ggf. Substrat nach mechanisch-biologischer Behandlung eingearbeitet. Sollte die Methanoxidationskapazität der Rekultivierungsschicht, für die ganz oder teilweise Fein- oder Grobsubstrat verwendet werden kann, nicht ausreichen, so kann weiterhin ein Biofilter 16 vorgesehen werden, der sich durch eine Ausnehmung in der Rekultivierungsschicht erstreckt und mit der Entwässerungsschicht (Gasverteilerschicht) 12 in Kontakt steht. Im Biofilter 16 werden ebenfalls die Deponiegase mikrobiell und chemisch abgebaut. Schließlich ist oberhalb der Rekultivierungsschicht 14 eine Filterschicht 18 zur Methanoxidation aus Grobsubstrat bzw. abgesiebten Feinsubstrat (≥ 10 mm) vorgesehen, sofern die Rekultivierungsschicht nicht über die erforderliche Methanoxidationskapazität verfügt.
   Der Aufbau über dem Deponiekörper 8 kann insbesondere auch als temporäre Maßnahme bei der Abdichtung bzw. Abdeckung von Deponie in Teilen oder zur Gänze eingesetzt werden.
   Hierbei wird über dem Deponiekörper 8 eine Ausgleichsschicht ggf. Gasdrainschicht 13 angeordnet. Diese kann insbesondere bei temporären Maßnahmen auch weggelassen werden. Darüber wird dann eine Oberflächendichtungsschicht 10 aus Feinsubstrat angeordnet. Sofern die Frage der Sickerwasserbildung nicht im Vordergrund steht, kann bei temporären Abdichtungen auf die Oberflächendichtungsschicht 10 verzichtet werden. Dann wird unmittelbar die Rekultivierungs- bzw. Methanoxidationsschicht aufgebracht, siehe Fig. 2b. Bei größeren Gasanfall jedoch kann eine Entwässerungsschicht (Gasverteilerschicht) 12 erforderlich werden.
   Zumindest teilweise sind erfindungsgemäß die verschiedenen zuvor beschriebenen Schichten der Deponie aus einem Feinsubstrat oder einem Grobsubstrat hergestellt, die bei dem oben beschriebenen erfindungsgemäßen Verfahren zur mechanisch-biologischen Restabfallbehandlung erzeugt worden sind. Dabei bestehen die Basisdichtungsschicht 4 und die Oberflächendichtungsschicht 10 teilweise oder ganz aus dem Feinsubstrat, während die Entwässerungsschicht 6, die Entwässerungsschicht (Gasverteilerschicht) 12, die Ausgleichs- bzw. Gasdrainschicht 13, die Rekultivierungsschicht 14 und/oder die Methanoxidationsschicht 18 aus dem Grobsubstrat ganz oder teilweise bestehen. Schließlich ist es auch möglich, den gesamten Deponiekörper 8 aus dem Feinsubstrat herzustellen, so daß insgesamt der Deponiekörper 8 sowohl die Funktion der Basisdichtungsschicht 4 als auch die Funktion der Oberflächendichtungsschicht 10 in einem Aufbau erfüllt. Zudem ist es bei Anwendung eines nassen Anaerobverfahrens wenig auslaugbar.
   Ziel ist es beispielsweise, daß nur noch geringe Gasmengen an der Oberfläche des Deponiekörpers in die Rekultivierungsschicht eingeleitet werden, so daß diese Deponiegase dort verdünnt und durch eine mikrobielle Methanoxidation bzw. durch chemische Vorgänge abgebaut werden. Weiterhin soll das an der Basis auftretende Sickerwasser in seiner Menge sehr gering und in seiner Beschaffenheit nur noch wenig belastet sein.
   Die Rekultivierungsschicht 14 aus herkömmilchem Material kann durch gezielte Zugabe von aus Fein- oder Grobsubstrat bestehenden Materialien so verbessert werden, daß das Methanoxidationspotential gesteigert wird. Es ist auch möglich, die Rekultivierungsschicht 14 ausschließlich aus einem Grobsubstrat herzustellen, so daß die zusätzliche Methanoxidationsschicht 18, die zur weiteren Methanoxidation über die Rekultivierungsschicht 14 geschüttet wird, nicht oder nicht mehr in vollem Maße erforderlich ist.
   Um die Wirkung der Methanoxidation bzw. des chemischen Abbaus zu verbessern, können die Deponiegase, ehe sie in die Rekultivierungsschicht 14 einströmen, gezielt über eine Entwässerungsschicht (Gasverteilerschicht) 12 möglichst gleichmäßig verteilt werden, wobei die Entwässerungsschicht (Gasverteilerschicht) 12 die Funktion einer Drainage aufweist. Durch die Drainage wird auch sichergestellt, daß Kurzschlußströmungen in stärker durchlässigen Bereichen der Rekultivierungsschicht 14 vermindert werden.
   Die Deponiegase werden zunächst gezielt durch die Oberflächendichtungsschicht 10 an der Oberfläche des Deponiekörpers 8 weitgehend zurückgehalten. Je nach Gasanfall und Durchlässigkeit kann es aber sein, daß die kleineren Gasmengen gleichwohl durch die Dichtungsschicht hindurch abgeführt werden. Reicht dies nicht aus, können die Gase den Deponiekörper 8 an definierten Stellen verlassen. Die Oberflächendichtungsschicht 10 kann dabei zumindest teilweise aus dem Feinsubstrat bestehen, das nach dem erfindungsgemäßen Verfahren zur mechanisch-biologischen Restabfallbehandlung erzeugt worden ist. Weiterhin können auch zusätzlich mineralische Materialien sowie Kunststoffdichtungsbahnen verwendet werden, um eine geeignete Oberflächenabdichtung zu erzielen. Dabei dient die Oberflächendichtungsschicht 10 einerseits zur Verbesserung der Gasableitung und andererseits auch zum Zurückhalten des Niederschlagswassers. Insbesondere kann die Oberflächendichtungsschicht 10 Teil einer Kombinationsdichtung sein, wenn z. B. das Oberflächendichtungssystem aus zwei Dichtungselementen, einer mineralischen Dichtung und einer Kunststoffdichtungsbahn bestehen soll. Hier kann die mineralische Dichtungsschicht ganz oder teilweise durch Feinsubstrat ersetzt werden. Die Durchtrittsstellen für die Deponiegase müssen daher so ausgeführt sein, daß ein Eindringen von Wasser in den Deponiekörper 8 nicht möglich ist.
   Wie in Fig. 3 dargestellt ist, besteht eine weitere Möglichkeit der Ausgestaltung der Oberflächendichtungsschicht 10 darin, daß oberhalb der Oberflächendichtungsschicht 10 eine Kunststoffdichtungsbahn 24 angeordnet wird, die überlappend verlegt ist. Somit kann kein Wasser in den Deponiekörper 8 eindringen, während die Deponiegase aus dem Deponiekörper 8 jedoch austreten und in die Rekultivierungsschicht 14 einströmen können.
   Wie in Fig. 4a dargestellt ist, kann eine technische Ausführung so ausgestaltet sein, daß die Oberflächendichtungsschicht 10 linien- oder punktförmig durchbrochen ist. Die Durchbruchbereiche sind dann mit einem durchlässigen Material 20, wie beispielsweise Schotter, verfüllt und an der Oberfläche mit einer Kunststoffdichtungsbahn 22 abgedichtet. Somit kann das Deponiegas in die Rekultivierungsschicht 14 eindringen, während gleichzeitig das Eindringen von Niederschlagswasser oder anderem Oberflächenwasser in den Deponiekörper 8 verhindert wird.
   Wie in Fig. 4b dargestellt ist, kann die Gasableitung über die Rekultivierungsschicht 14 auch dadurch unterstützt werden, daß für eine zusätzliche Gasableitungsmöglichkeit in der Rekultivierungsschicht 14 ein Biofilter 16 angeordnet ist, der insbesondere als Desodorierungselement dient.
   Wie in Fig. 4c dargestellt ist, ist es ebenso möglich, den gesamten Deponiekörper 8 aus Feinsubstrat herzustellen, so daß der Deponiekörper 8 selbst die Funktionen der Basisdichtungsschicht 4 sowie der Oberflächendichtungsschicht 10 erfüllt. Diese Eigenschaften werden durch eine Verdichtung des Feinsubstrates noch verbessert. Der Deponiekörper kann dann eine geringe Durchlässigkeit (≤ 10^{-/} bis 10⁻⁸ m/s) aufweisen. Durch eine nasse anaerobe Behandlung (Wasser-/Feststoff-Verhältnis > 6) ist es nur noch wenig auslaugfähig.
   Schließlich ist es auch vorteilhaft, wenn die Oberfläche des Deponiekörpers 8 und/oder der Oberflächendichtungsschicht 10 geglättet wird, beispielsweise mit einer Glattmantelwalze, um so die Oberflächenwasserableitung zu optimieren.
   Die Wirkung der Basisdichtungsschicht 4 bzw. auch der Oberflächendichtungsschicht 10 kann bei der Verwendung des Feinsubstrates dadurch verbessert werden, daß das Feinsubstrat gezielt verdichtet wird. Damit wird die Dichtungseigenschaft gegenüber einem einfach aufgebrachten Feinsubstrat noch verbessert. Gezielt läßt sich das verdichtete Feinsubstrat als letzte Lage unter einem Dichtungsaufbau anordnen, um so eine geeignete Basis für einen Dichtungsaufbau zu erzielen.

### Bezugszeichenliste

- 2: Untergrund
- 4: Basisdichtungsschicht
- 6: Drainageschicht
- 8: Deponiekörper
- 10: Oberflächendichtungsschicht
- 12: Gasverteilerschicht
- 14: Rekultivierungsschicht
- 16: Biofilter
- 18: Schicht
- 20: Schotter
- 22: Folie
- 24: Folie
- 26: Verdichtungsschicht

## Patentansprüche

1. Verfahren zum Herstellen oder Sanieren oder Abdichten von Deponien aus Siedlungsabfällen und dergleichen
**dadurch gekennzeichnet**, daß
a) in einem ersten mechanischen Verfahrensschritt aus Restabfällen ein Substrat mit einem hohen Anteil an biologisch abbaubaren Stoffen abgetrennt wird,
b) in einem biologischen Verfahrensschritt das Substrat einer aeroben, und ggf. zusätzlich anaeroben, Behandlung unterzogen wird, wie z. B. bei einer Kompostierung bzw. Vergärung/Faulung, so daß die Atmungsaktivität in 4 Tagen ≤ 10 mg O₂ /g TS liegt,
c) in einem zweiten mechanischen Verfahrensschritt das Substrat in ein Feinsubstrat und in ein Grobsubstrat mit einem Siebschnitt im Bereich von 40 bis 100 mm, vorzugsweise 60-60 mm, getrennt oder derart zerkleinert wird, daß das Substrat kleiner als 100 mm, vorzugsweise kleiner als 80 mm, fein wird und
d) aus dem so erhaltenen Substrat die gesamte Deponie oder einzelne Schichten einer Deponie erstellt werden, wobei das Feinsubstrat für Deponieschichten hoher Dichte und geringer Durchlässigkeit und das Grobsubstrat für Rekultivierungs-, Drainage-, Gasverteil- oder Methanoxidationsschichten verwendet wird.

2. Verfahren nach Anspruch 1, dadurch gekennzeichnet, daß im zweiten mechanischen Verfahrensschritt vor der Trennung des Substrates eine Zerkleinerung des Substrates durchgeführt wird.

3. Verfahren nach Anspruch 1 oder 2, dadurch gekennzeichnet, daß im zweiten mechanischen Verfahrensschritt mindestens ein Siebeschritt durchgeführt wird.

4. Verfahren nach einem der Ansprüche 1 bis 3, dadurch gekennzeichnet, daß der zweite mechanische Verfahrensschritt vor dem biologischen Verfahrensschritt durchgeführt wird.

5. Verfahren nach einem der Ansprüche 1 bis 4, dadurch gekennzeichnet, daß der zweite mechanische Verfahrensschritt nach dem biologischen Verfahrensschritt, ggf. erneut, durchgeführt wird.

6. Verfahren nach einem der Ansprüche 1 bis 5, dadurch gekennzeichnet, daß als zusätzlicher biologischer Verfahrensschritt ein nasses Anaerobverfahren mit einem Wasser-/Feststoff-Verhältnis > 6 eingesetzt wird.

7. Verfahren nach einem der Ansprüche 1 bis 6, dadurch gekennzeichnet, daß das Feinsubstrat mit Hilfe von Siebaggregaten und/oder Mietenumsetzaggregaten oder Mischeinrichtungen homogenisiert wird.

8. Verfahren nach einem der Ansprüche 1 bis 7, dadurch gekennzeichnet, daß mineralische Materialien vor einer Kompostierung oder Vergärung des abgetrennten Substrates oder nach einer Kompostierung oder Vergärung dem Feinsubstrat zugemischt werden.

9. Verfahren nach einem der Ansprüche 1 bis 6, dadurch gekennzeichnet, daß das Grobsubstrat mit Hilfe von Siebaggregaten und/oder Mietenumsetzaggregaten oder Mischeinrichtungen homogenisiert wird.

10. Verfahren nach einem der Ansprüche 1 bis 6 oder 9, dadurch gekennzeichnet, daß stabile organische Substratträger, insbesondere Holzteile, dem Grobsubstrat zugemischt werden.

11. Verfahren nach einem der Ansprüche 1 bis 6 oder 9 oder 10, dadurch gekennzeichnet, daß bei dem zweiten mechanischen Verfahrensschritt das Substrat bzw. Grobsubstrat von flächigen Materialien, beispielsweise von Folien, im wesentlichen befreit wird.

12. Verfahren nach einem der Ansprüche 1 bis 6 oder 9 bis 11, dadurch gekennzeichnet, daß langfristig stabile Strukturbildner dem Grobsubstrat zugemischt werden.

13. Verfahren nach einem der Ansprüche 1 bis 11, dadurch gekennzeichnet, daß von dem Feinsubstrat ein Grobanteil mit einer Korngröße ≥ 5 mm, vorzugsweise ≥ 10 mm zur Nutzung als Grobsubstrat abgetrennt wird, wobei der Feinanteil vorzugsweise als Methanoxidationsmaterial verwendet wird.

14. Deponie aus Siedlungsabfällen, hergestellt nach dem Verfahren nach einem der Ansprüche 1 bis 13,
- mit einem die zu deponierenden Stoffe aufweisenden Deponiekörper (8),
- mit einer den Deponiekörper (8) nach unten abdichtenden Basisdichtungsschicht (4),
- mit einer den Deponiekörper (8) nach oben abdichtenden Oberflächendichtungsschicht (10),
**dadurch gekennzeichnet**,
- daß die Basisdichtungsschicht (4) und/oder die Oberflächendichtungsschicht (10) zumindest teilweise ein Feinsubstrat aufweist, das bei einer mechanisch-biologischen Restabfallbehandlung gemäß einem der Ansprüche 1 bis 13 abgetrennt worden ist.

15. Deponie nach Anspruch 14, dadurch gekennzeichnet, daß der Deponiekörper (8) zumindest teilweise ein Feinsubstrat aufweist, das bei einer mechanisch-biologischen Restabfallbehandlung nach einem der Ansprüche 1 bis 13 abgetrennt worden ist.

16. Deponie aus Siedlungsabfällen, hergestellt nach dem Verfahren nach einem der Ansprüche 1 bis 13,
- mit einem die zu deponierenden Stoffe aufweisenden Deponiekörper (8),
- mit einer den Deponiekörper (8) nach unten abdichtenden Basisdichtungsschicht (4),
- mit einer den Deponiekörper (8) nach oben abdichtenden Oberflächendichtungsschicht (10) und
- mit einer oberhalb des Abfalls (8) angeordneten Rekultivierungsschicht (14),
- mit einer oberhalb des Abfalls (8) angeordneten Methanoxidationsschicht (18),
**dadurch gekennzeichnet**,
- daß die Rekultivierungsschicht (14) zumindest teilweise ein Grobsubstrat oder ein Feinsubstrat nach einer Abtrennung einer Feinstfraktion mit einer Korngröße ≤ 10 mm aufweist, das bei einer mechanisch-biologischen Restabfallbehandlung nach einem der Ansprüche 1 bis 13 abgetrennt worden ist.

17. Deponie nach einem der Ansprüche 14 bis 16, dadurch gekennzeichnet, daß eine Drainageschicht (6) zwischen der Basisdichtungsschicht (4) und dem Deponiekörper (8) angeordnet ist und daß die Drainageschicht (6) zumindest teilweise ein Grobsubstrat aufweist, das bei einer mechanisch-biologischen Restabfallbehandlung nach einem der Ansprüche 1 bis 13 abgetrennt worden ist.

18. Deponie nach einem der Ansprüche 14 bis 17, dadurch gekennzeichnet, daß eine Gasverteilerschicht (12) zwischen der Oberflächendichtungsschicht (10) und der Rekultivierungsschicht (14) bzw. zwischen Deponiekörper (8) und Oberflächenabdichtungsschicht (10) angeordnet ist und daß die Gasverteilerschicht (12) zumindest teilweise ein Grobsubstrat aufweist, das bei einer mechanisch-biologischen Restabfallbehandlung nach einem der Ansprüche 1 bis 13 abgetrennt worden ist.

19. Deponie nach einem der Ansprüche 16 bis 18, dadurch gekennzeichnet, daß die Methanoxidationsschicht (18) zumindest teilweise ein Grob- oder Feinsubstrat aufweist, das bei einer mechanisch-biologischen Restabfallbehandlung nach einem der Ansprüche 1 bis 13 abgetrennt worden ist.
